# EUROPEAN PATENT APPLICATION

(11) **EP 3 226 066 A1**
(43) Date of publication of application: **04.10.2017**
(21) Application number: 15863213.3
(22) Date of filing: 26.11.2015
(51) Int. Cl.: G02B 27/22, G06F 1/16, H04N 13/04

(54) **3D FLEXIBLE DISPLAY DEVICE AND DISPLAY METHOD THEREOF**

(30) Priority: 29.11.2014 CN 201410709029
(71) Applicant: Kunshan New Flat Panel Display Technology Center Co. Ltd, KunShan City, Jiangsu 215300 (CN); Kunshan Go-Visionox Opto-Electronics Co., Ltd., KunShan City, Jiangsu 215300 (CN)
(72) Inventor: HUANG, Xiuqi, Kushan Jiangsu 215300 (CN); ZHAO, Jingxun, Kushan Jiangsu 215300 (CN)
(74) Representative: Corradini, Corrado
(86) International application number: PCT/CN2015/095646
(87) International publication number: WO 2016/082775

(57) **Abstract**

A 3D flexible display device is disclosed, including: a flexible screen, made of flexible materials, for displaying images; and a height control layer, formed on a back side of the flexible screen, configured to change the height of the raising on the area of the height control layer towards the flexible screen to control the height of the raising on the corresponding display area of the flexible screen. A display method of the 3D flexible display device is also disclosed. The above 3D flexible screen and 3D display method can make use of the deformation feature of the flexible display device, and raise a corresponding display area on the flexible display device with the height control to the area on the height control layer, thus presenting real 3D effects.

## Description

### Field

The present disclosure relates generally to the field of flexible display technology, and more particularly, to a control method for operation of a flexible display device.

### Background

A flexible display device in itself has many advantages, such as convenient to carry, being flexible, changing shape freely and so on. As the flexible display technology becomes more and more mature, the flexible screen will become common to our daily life, and the flexible mobile device will also gradually become a main tool in our daily life. The flexible mobile device will incrementally replace traditional mobile devices, such as mobile phone or tablet computer in the near future.

3D display technology is a technology allowing a user to feel a three-dimensional sense through inputting images of different viewing angles into the user's left and right eyes. However, this is only a 3D display in user's senses, so the traditional 3D display technology cannot present a real 3D display, that is, the traditional 3D display technology cannot bring a three-dimensional experience to the user in the real space.

### Summary

Based on the above, it is necessary to provide a 3D flexible screen which can present a real 3D display.

In addition, a 3D display method is provided, and a related computer storage media is also provided.

A 3D flexible display device includes:
a flexible screen, made of flexible materials, for displaying images; and
a height control layer, formed on a back side of the flexible screen, including one or more areas each of which is controllable to be raised towards the flexible screen, wherein each raising area of the height control layer has a raising height which is changeable so that an area on the flexible screen corresponding to the raising area of the height control layer has a raising height which is changed according to the raising height of the raising area.

In one embodiment, the 3D flexible display device further includes a display circuit configured to drive the flexible screen to display images, and a height control circuit configured to control the raising of the height control layer.

In one embodiment, both the display circuit and the height control circuit are controlled simultaneously by a same control unit.

In one embodiment, the height control circuit is further configured to control the raising area or raising areas in one or more areas of the height control layer, and the raising height of each raising area.

In one embodiment, the 3D flexible display device further includes a rigid frame by which edges of the flexible screen and the height control layer are limited and fixed.

In one embodiment, the height control layer is made of piezoelectric materials or memory materials.

A 3D display method of a flexible display device, based on the above 3D flexible display device, includes:
reading display data including image data and height control data, corresponding to a frame of image;
using the corresponding image data and height control data to image display and height control of the same frame of image respectively; and repeating the above steps for a next frame of image.

In one embodiment, the height control data includes coordinates and raising height value of a raising area.

One or more computer storage media includes computer executable instructions to perform a 3D display method of a flexible display device, the method including:
reading display data including image data and height control data, corresponding to a frame of image;
using the corresponding image data and height control data to image display and height control of the same frame of image respectively; and repeating the above steps for a next frame of image.

The above 3D flexible screen and 3D display method can make use of the deformation feature of the flexible display device, and raise a corresponding display area on the flexible display device with the height control to the area on the height control layer, thus presenting real 3D effects.

### Brief Description of the Drawings

FIG. 1 is a structural schematic diagram showing layers of a 3D flexible display device according to one embodiment.
FIG. 2 is a schematic diagram of working principle of implementing real 3D display.

### Detailed Description of the Preferred Embodiments

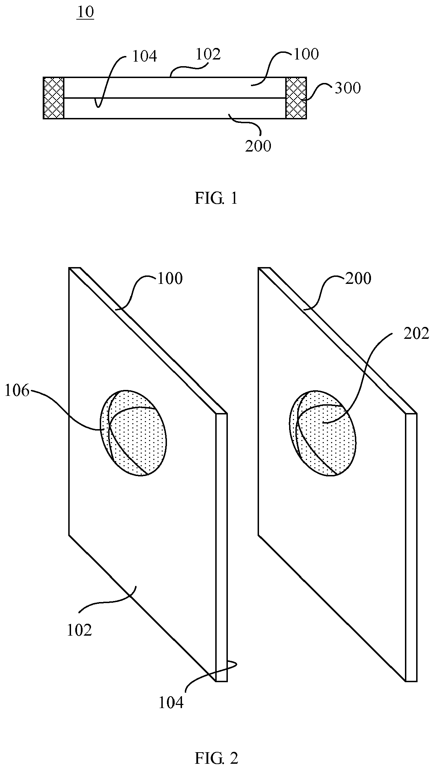

As shown in FIG. 1, it is a structural schematic diagram showing layers of a 3D flexible display device according to one embodiment. The 3D flexible display device 10 includes a flexible screen 100, a height control layer 200 and a frame 300. The flexible screen 100 is made of a flexible material. In addition to display images, the flexible screen has the function of changing its shape, for example, bending or folding. The flexible screen 100 has a display surface 102 as a surface to display images, and a back surface 104 opposite to the display surface 102. The height control layer 200 is formed on a back side surface 104 of the flexible screen 100. The height control layer 200 is made of materials which can control the scalability of the height control layer 200, for example, piezoelectric materials or memory materials. The height control layer 200 has one or more area. Any area on the height control layer 200 can be controlled so that the area is in a raised state.

Edges of the flexible screen 100 and the height control layer 200 are limited and fixed by the rigid frame 300. The rigid frame 300 can limit the size of deformation of the flexible screen 100 to prevent image distortions caused by excessive deformation.

Using FIG.2 for reference, the flexible screen 100 is made of a flexible material, so the shape itself can be changed by outside force. The height control layer 200 is made of materials which can control the scalability of the height control layer 200, such that the raising height of any area of the height control layer 200 can be changed by the control of the scalability of the material. When a certain area 202 of the height control layer 200 is raised from the back surface 104 of the flexible screen 100 towards the flexible screen 100, the area 202 will force the corresponding area 106 on the flexible screen 100 to be raised, resulting in an effect that the image displayed on the area 106 is raised. In this way, the raising height of the corresponding display area on the flexible screen 100 can be controlled by changing the height of the area of the height control layer 200 raised to the flexible screen 100. Further, the 3D flexible display device further includes a display circuit (not shown) configured to drive the flexible screen to display images, and a height control circuit (not shown) configured to control the raising of the height control layer.

The display circuit is a circuit appropriate to the drive principle of the flexible screen 100. For example, if the flexible screen 100 adopts the liquid crystal display technology, the display circuit adopts the liquid crystal driving technology accordingly; and if the flexible screen 100 adopts the organic light-emitting display technology, the display circuit adopts the organic light-emitting driving technology accordingly.

The height control circuit is further configured to control the raising area of the height control layer 200, and the raising height of each raising area. Both the display circuit and the height control circuit are controlled by a same control unit simultaneously, so that the image to be displayed matches the height and position of the image to be raised.

Based on the above 3D flexible display device 10, a 3D display method is provided, including the following steps.

Step S101: reading display data including image data and height control data, corresponding to a frame of image. The height control data includes coordinates and raising height value of a raising area. Specifically, if the raising height value is 0, it means that it does not require the corresponding unit to be raised, and the signal input into the unit can be canceled to make the unit return to a flat state, to prepare for the next raising control. Each raising control may be based on the previous raising, and alternatively, the unit may return to the flat state before a next raising control.

Step S102: using the corresponding image data and height control data to image display and height control of the same frame of image respectively. Step S103: determining whether there is a next frame of image, and if so, returning to the step S101.

The above 3D flexible screen and the 3D display method can make use of the deformation feature of the flexible display device, and raise a corresponding display area on the flexible display device with the height control to the area on the height control layer, thus presenting real 3D effects. Based on the above 3D display method, one or more computer storage media including computer executable instructions to perform the above 3D display method is provided.

Technical features of the above embodiments may be combined arbitrarily. For brief description, not all of the possible combinations of the technical features of the above embodiments are described, but it will be appreciated that these possible combinations belong to the scope of the present disclosure once there is no conflict between the technical features.

The above are embodiments of the disclosure described in detail, and should not be deemed as limitations to the scope of the present disclosure. It should be noted that variations and improvements will become apparent to those skilled in the art to which the present disclosure pertains without departing from its spirit and scope. Therefore, the scope of the present disclosure is defined by the appended claims.

## Claims

1. A 3D flexible display device, comprising:
a flexible screen, made of flexible material, for displaying images; and
a height control layer, formed on a back side of the flexible screen, including one or more areas each of which is controllable to be raised towards the flexible screen, wherein each raising area of the height control layer has a raising height which is changeable so that an area on the flexible screen corresponding to the raising area of the height control layer has a raising height which is changed according to the raising height of the raising area.

2. The 3D flexible display device of claim 1, further comprising: a display circuit configured to drive the flexible screen to display images, and a height control circuit configured to control the raising of the height control layer.

3. The 3D flexible display device of claim 2, wherein both the display circuit and the height control circuit are controlled simultaneously by a same control unit.

4. The 3D flexible display device of claim 2, wherein the height control circuit is further configured to control the raising area or raising areas in one or more areas of the height control layer, and the raising height of each raising area.

5. The 3D flexible display device of claim 1, further comprising: a rigid frame by which edges of the flexible screen and the height control layer are limited and fixed.

6. The 3D flexible display device of claim 1, wherein the height control layer is made of piezoelectric materials or memory materials.

7. A 3D display method of a flexible display device, based on the 3D flexible display device of any one of claims 1-6, comprising:
reading display data including image data and height control data, corresponding to a frame of image;
using the corresponding image data and height control data to image display and height control of the same frame of image respectively; and
repeating the above steps for a next frame of image.

8. The 3D display method of the flexible display device of claim 7, wherein the height control data includes coordinates and raising height value of a raising area.

9. One or more computer storage media includes computer executable instructions to perform a 3D display method of a flexible display device, based on the 3D flexible display device of any one of claims 1-6, the method comprising:
reading display data including image data and height control data, corresponding to a frame of image;
using the corresponding image data and height control data to image display and height control of the same frame of image respectively; and
repeating the above steps for a next frame of image.

10. The computer storage media of claim 9, wherein the height control data includes coordinates and raising height value of a raising area.
